Europäisches Patentamt

European Patent Office

Office européen des brevets

(19)

(11) Numéro de publication : **0 295 192 B1**

# FASCICULE DE BREVET EUROPEEN

(12)

(45) Date de publication du fascicule du brevet :
04.09.91 Bulletin 91/36

(51) Int. Cl.⁵ : **F27B 13/02, F27D 1/18, F16L 55/12, F27D 23/00**

(21) Numéro de dépôt : 88420185.6

(22) Date de dépôt : 07.06.88

(54) Dispositif et procédé d'obturation des cloisons d'un four à chambres à feu tournant destiné à la cuisson de blocs carbonés.

(30) Priorité : 09.06.87 FR 8708564

(43) Date de publication de la demande :
14.12.88 Bulletin 88/50

(45) Mention de la délivrance du brevet :
04.09.91 Bulletin 91/36

(84) Etats contractants désignés :
DE GB IT NL

(56) Documents cités :
DE-A- 3 031 356
FR-A- 324 153
GB-A- 2 129 918
US-A- 1 695 187
US-A- 1 814 914
US-A- 3 425 447
US-A- 3 495 606

(73) Titulaire : **ALUMINIUM PECHINEY**
**Immeuble Balzac 10, place des Vosges La Défense 5**
**F-92400 Courbevoie (FR)**

(72) Inventeur : **Boffa, Bernard**
**46 rue Paul Bert**
**F-65300 Lannemezan (FR)**
Inventeur : **Dreyer, Christian**
**327 rue St. Pierre**
**F-73300 Saint-Jean-De Maurienne (FR)**

(74) Mandataire : **Pascaud, Claude et al**
**PECHINEY 28, rue de Bonnel**
**F-69433 Lyon Cédex 3 (FR)**

EP 0 295 192 B1

Jouve, 18, rue Saint-Denis, 75001 PARIS

## Description

## DOMAINE TECHNIQUE DE L'INVENTION

L'invention concerne un dispositif et un procédé d'obturation des cloisons d'un four à chambres ouvertes, dit "à feu tournant" ou "à progression de feu" destiné à la cuisson de blocs carbonés tels que les anodes pour la production électrolytique d'aluminium selon le procédé Hall-Héroult.

## ETAT DE LA TECHNIQUE

Les anodes carbonées destinées aux cuves de production d'aluminium par électrolyse d'alumine dissoute dans de la cryolithe fondue sont obtenues par mise en forme d'une pâte carbonée résultant du malaxage, à environ 120 à 200°C, d'un mélange de brai et de coke broyé. Après mise en forme, les anodes sont cuites pendant une centaine d'heures à une température de l'ordre de 1100 à 1200°C. D'autres types de blocs carbonés sont obtenus par le même procédé.

Bien qu'il existe quelques procédés de cuisson continue en four tunnel, une grande partie des installations de cuisson en service dans le monde à ce jour sont du type "four à chambre" dits "à feu tournant" (ring furnace) ou encore "à avancement de feu". Ces fours se divisent eux-mêmes en deux catégories, les fours fermés et les fours dits "à chambres ouvertes" qui sont les plus utilisés, décrits notamment dans le brevet US 2699931, ou dans le brevet FR 2535834 (= GB 2129918) au nom d'Aluminium Péchiney. La présente invention s'applique plus particulièrement aux fours à chambres ouvertes. Ce type de four comporte deux travées parallèles dont la longueur totale peut atteindre plus d'une centaine de mètres. Chaque travée 2 comporte une succession de chambres 1, séparées par des murs transversaux et ouvertes à leur partie supérieure, pour permettre le chargement des blocs crus et le déchargement des blocs cuits refroidis. Chaque chambre comporte, disposées parallèlement au grand axe XX' du four, un ensemble de cloisons creuses 3, à parois minces, dans lesquelles vont circuler les gaz chauds assurant la cuisson, ces cloisons alternant avec des alvéoles 5 dans lesquelles on empile les blocs 6 à cuire, noyés dans une poussière carbonée (coke, anthracite ou résidus carbonés broyés ou tout autre matériau de garnissage pulvérulent). Il y a par exemple 6 alvéoles et 7 cloisons alternées par chambre.

Les cloisons creuses sont munies, à leur partie supérieure, d'ouvertures obturables 7 dites "ouvreaux" ou "ouvreaux de cloisons" ; elles comportent également des chicanes 4 pour allonger et répartir plus uniformément le trajet des gaz de combustion. En outre, chaque cloison d'une chambre communique avec la cloison correspondante de la chambre amont et de la chambre aval par des ouvertures (dites ouvreaux de mur) 8 ménagées dans la partie supérieure du mur transversal et qui sont obturables par introduction de volets dits "registres" dans une fente aménagée à la partie supérieure du mur.

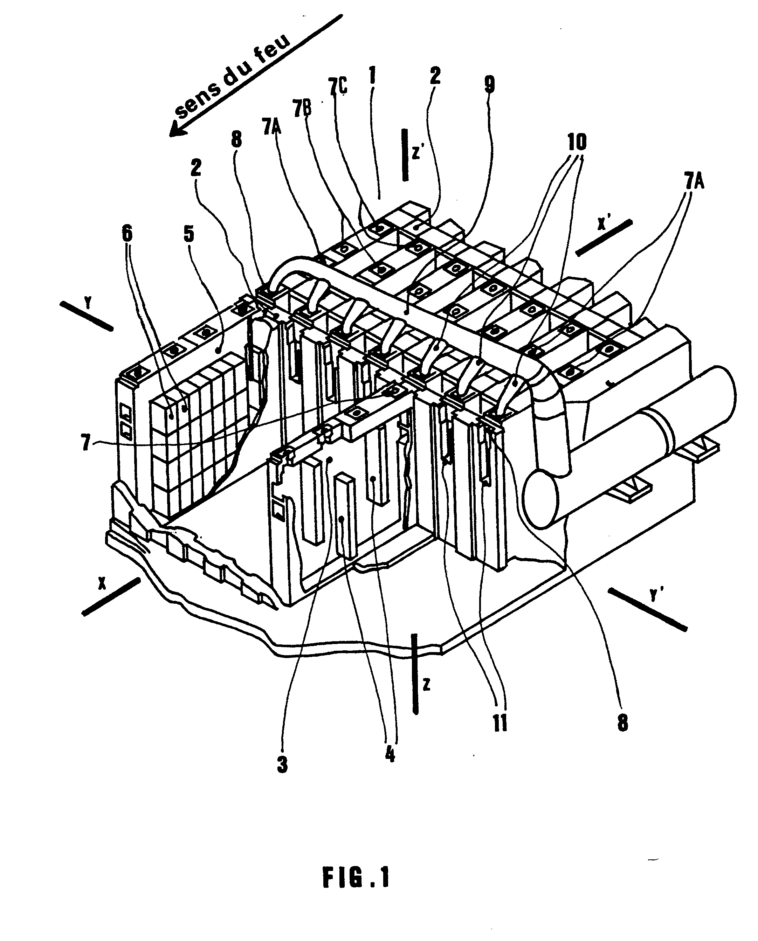

Sur la figure 1, les différentes lignes d'ouvreaux de cloisons sont désignés à partir de la pipe 9, par les repères 7A, 7B, 7C, le repère 7 désignant un ouvreau de cloison en général.

Le chauffage du four est assuré par des rampes de brûleurs, ayant une longueur égale à la largeur des chambres, et dont les injecteurs viennent se placer sur les ouvreaux des chambres concernées. En amont des brûleurs (par rapport au sens d'avancement du feu), on dispose une pipe de soufflage d'air de combustion, et, en aval, une pipe d'aspiration des gaz brûlés. Le chauffage est assuré à la fois par la combustion du combustible injecté (gaz ou fuel), et par celle des vapeurs de brai émises par les blocs en cours de cuisson. Chaque pipe, telle que 9, est munie d'autant d'ajutages 10 que d'ouvreaux de cloison 7 en ligne (ici nombre de 7) dans lesquels ils pénètrent.

Au fur et à mesure que la cuisson se produit, on fait avancer par exemple toutes les 24 heures, l'ensemble pipes de soufflage-brûleurs-pipe d'aspiration, chaque chambre assurant ainsi, successivement, les fonctions de chargement des blocs carbonés crus, préchauffage naturel (par les gaz de combustion), préchauffage forcé et cuisson à 1100-1200° (zone dite plein feu), refroidissement des blocs carbonés (et préchauffage de l'air pour la combustion), déchargement des blocs carbonés cuits, réparations éventuelles et ainsi de suite.

## PROBLEME TECHNIQUE A RESOUDRE

La conduite optimale d'un four à chambres ouvertes à feu tournant implique que l'on contrôle de nombreux paramètres et tout particulièrement la circulation de l'air et des gaz de combustion, assurée par au moins une pipe de soufflage en amont de la zone dite "en feu" et comportant des brûleurs et une pipe d'aspiration située à l'aval de la zone de préchauffage des anodes à cuire par les gaz de combustion.

Il est essentiel que la pipe d'aspiration n'aspire que des gaz de combustion, et le moins possible d'air extérieur. Pour cela, on doit obturer le passage des gaz entre la dernière chambre en préchauffage et la chambre aval suivante, dite "chambre morte", ce que l'on fait habituellement au moyen de registres coulissants introduits dans les ouvreaux de mur.

L'expérience montre que cette obturation est souvent loin d'être parfaite, et qu'il y a d'importantes entrées d'air ambiant par infiltration. Le but de la présente invention est de résoudre cet inconvénient et d'assurer une obturation étanche entre la dernière chambre en préchauffage naturel et la chambre morte.

## OBJET DE L'INVENTION

Un premier objet de l'invention est un dispositif d'obturation déployable, amovible, destiné à l'obturation du regard de communication entre chaque cloison d'une chambre et la cloison correspondante de la chambre adjacente, et plus particulièrement de la dernière chambre en préchauffage naturel et de la chambre morte qui lui fait suite vers l'aval (par rapport au sens de circulation des gaz).

Un second objet de la même invention est un procédé d'obturation des cloisons d'un four à chambre, permettant d'interrompre la circulation d'air entre deux cloisons successives, en mettant en oeuvre le dispositif d'obturation déployable, procédé caractérisé en ce que le dispositif, en position repliée, est introduit dans l'ouvreau de la cloison concernée, puis déployée.

La circulation peut ensuite être rétablie en repliant le dispositif dans la cloison et en le retirant, en position repliée, par le même ouvreau.

Plus précisément, le dispositif d'obturation selon l'invention est caractérisé en ce qu'il comporte :

— une partie haute susceptible de dépasser l'ouvreau comprenant un profilé principal rigide formant un support et un bras de traction mobile en translation le long dudit profilé principal qui se prolongent vers une partie basse,

— ladite partie basse comprenant deux profilés rigides secondaires situés de part et d'autre dudit profilé principal, de quatre biellettes et d'un moyen d'obturation souple, rectangulaire, imperméable à l'air, supporté, sur chacun de ses deux grands côtés opposés, par l'un desdits profilés secondaires, les parties terminales en vis-à-vis des deux profilés secondaires étant reliées par deux biellettes, chacune de ces biellettes étant articulée :

— par une de ses extrémités sur une desdites parties terminales

— par son autre extrémité à l'autre biellette en un point de jonction commun,

les biellettes les plus proches de ladite partie haute étant aussi articulées en leur point de jonction sur l'extrémité du profilé principal, les biellettes les plus proches de ladite partie basse étant aussi articulées en leur point de jonction sur l'extrémité basse du bras de traction.

## DESCRIPTION DES FIGURES

● La figure 1 se rapporte à l'art antérieur et a été décrite précédemment.

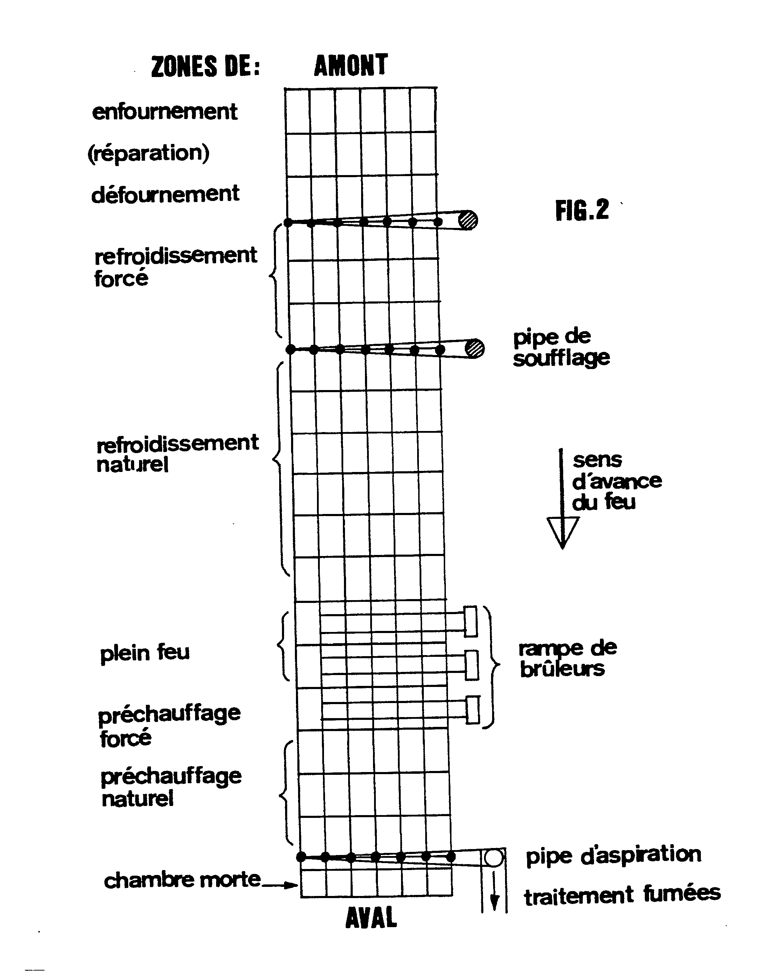

● La figure 2 représente en vue de dessus schématisée une partie d'une travée d'un four à chambres ouvertes auquel s'applique l'invention.

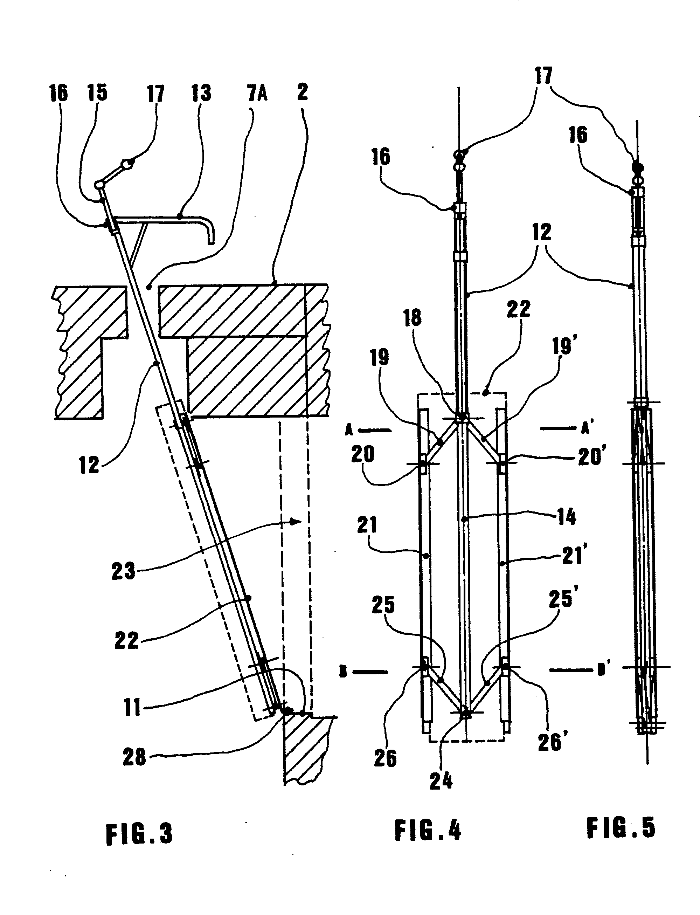

● Les figures 3 à 8 se rapportent à l'invention.

● La figure 3 représente en coupe, l'obturateur déployable en place dans une des cloisons d'un four à chambre.

● La figure 4 représente, en vue de face, l'obturateur en position déployée.

● La figure 5 représente, en vue de face, l'obturateur replié.

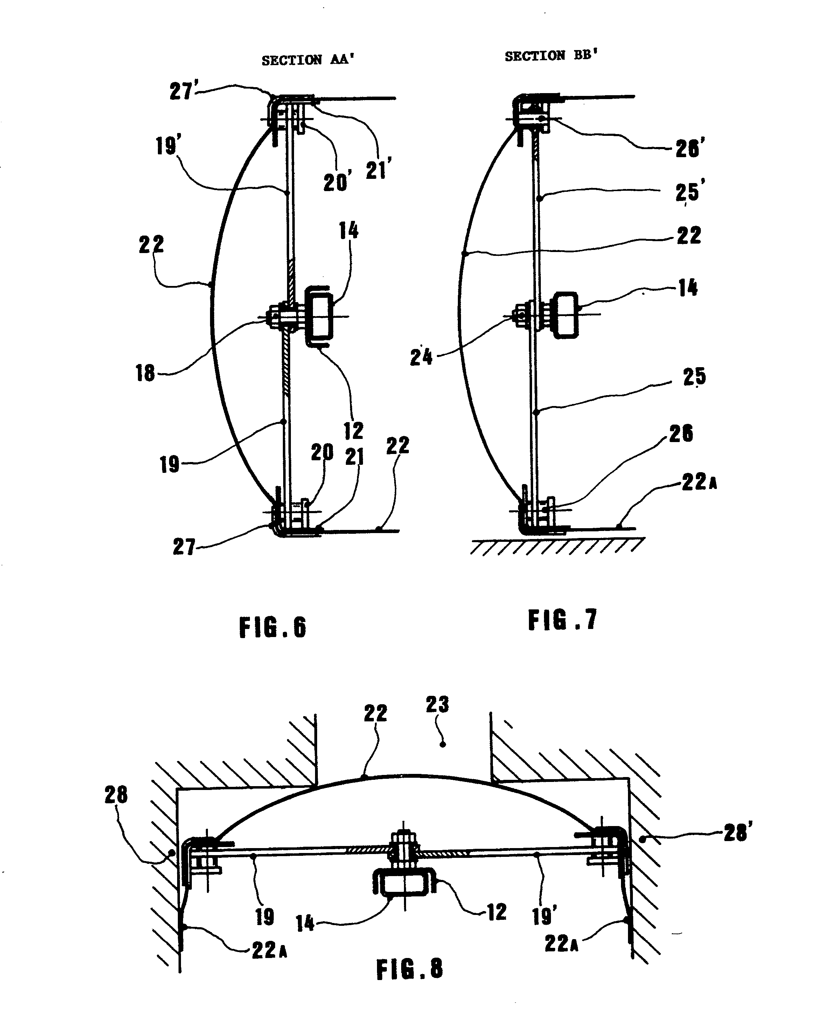

● Les figures 6 et 7 représentent une coupe à deux niveaux de l'obturateur déployé.

● La figure 8 représente, en coupe, l'obturateur, déployé, en place dans une cloison.

L'obturateur déployable comporte une partie haute, avec poignée support et commande d'ouverture/fermeture, cette partie dépassant de l'ouvreau dans lequel est introduit l'obturateur et une partie basse comportant le moyen d'obturation, qui est généralement une toile souple, le mécanisme d'ouverture/fermeture, et le moyen d'appui sur le rebord inférieur du regard à obturer.

La partie haute est constituée par un profilé principal rigide 12, formant support, par exemple en forme de U uni, à sa partie supérieure, d'une poignée support 13. Le long de ce profilé, coulisse un bras de traction 14 dont la partie haute, située au-dessus de la poignée support 13, est reliée à un moyen de coulissement, par exemple à une tige filetée 15 coopérant avec une douille filetée 16 fixée à sa partie supérieure du profilé 12, et dont la rotation est commandée par la poignée de manoeuvre 17. La rotation de la poignée 17 par rapport à l'axe de la tige filetée 15 (qui est relié au bras 14 par une rotule) entraîne donc, selon le sens de rotation, un coulissement vers le haut ou le bas du bras de traction 14 par rapport au profilé rigide 12. La partie basse est constituée de la façon suivante :

La partie inférieure du profilé 12 est munie d'une articulation 18 sur laquelle s'appuient deux biellettes supérieures 19, 19', de longueur égale, disposée de part et d'autre du bras de traction 14 et dont l'extrémité inférieure se raccorde par une articulation 20, 20' à un profilé (support 21, 21'), qui sert de support à la toile souple 22 constituant le moyen d'obturation du regard 23 qui assure normalement la communication avec la cloison chauffante 3 de la chambre adjacente amont. La partie inférieure du bras 14 est munie d'une articulation 24 sur laquelle s'appuient à une extrémité deux biellettes inférieures 25, 25', de longueur égale, dont l'autre extrémité est raccordée, par une articulation 26, 26', respectivement, à la partie inférieure des profilés 21 et 21'. La toile 22 est fixée le long de chaque profilé 21 et 21' par un contreprofilé 27 et 27', boulonné ou riveté par exemple. Elle dépasse d'une certaine longueur de façon que l'étanchéité de l'obturation soit assurée même si la cloison concernée est quelque peu déformée. La largeur de la toile peut être supérieure de 5 à 50% à l'écartement maximal des profilés 21, 21' en position déployée, le dépassement étant sensiblement symétrique sur chaque côté par rapport à l'axe du bras de traction 14.

Compte tenu de la température modérée qui règne dans les cloisons de la chambre morte (inférieure à 100°C), le choix de la toile n'est pas critique et on recherchera plutôt la solidité et l'étanchéité. On a utilisé avec succès des toiles tissées en fibres minérales (verre, silicoaluminates divers), revêtues d'une feuille de complexe d'aluminium-Mylar fixée à chaud, ou siliconées.

Le fonctionnement de l'obturateur est le suivant : par manoeuvre de la poignée 17, on descend au maximum le bras de traction 14. Cette opération éloigne l'aritculation 24 de l'articulation 18, ce qui a pour effet de rapprocher les profilés 21, 21' qui finissent par se trouver pratiquement en contact, comme on le voit sur la figure 6, la toile pouvant être repliée à la main autour des profilés jointifs.

Dans cette position repliée, l'obturateur est introduit par l'ouvreau de cloison 7 et descendu en biais, en s'appuyant sur les rebords latéraux de l'ouvreau jusqu'à ce que les ergots 28 et 28' disposés à la base des profilés 21-21', viennent en appui sur le rebord inférieur 11 du passage 8.

On peut alors déployer l'obturateur en tournant la poignée 17 en sens inverse, ce qui a pour effet de remonter le bras 14, donc de rapprocher l'articulation 24 de l'articulation 18, les biellettes 19-19' et 25-25' s'ouvrent, provoquant ainsi l'écartement des profilés 21-21' parallèlement au bras 14, jusqu'au maximum permis par le contact entre chaque profilé 21-21' et les parois latérales 29, 29' de la cloison. Dans cette position, la toile empêche toute entrée d'air dans la cloison correspondante de la dernière chambre en préchauffage naturel (qui est en dépression), en provenance des cloisons de la chambre morte qui est en communication avec l'air libre.

Il est important de souligner que l'étanchéité sur les côtés de la cloison est réalisée même si la cloison est déformée, grâce au dépassement de la toile par rapport aux axes 21, 21' et à la dépression régnant dans la chambre en amont.

Grâce à la mise en oeuvre de l'invention, la circulation d'air entre deux cloisons successives est interrompue non plus au niveau de l'ouvreau de mur transversal, mais par obturation du passage des gaz à la sortie de la cloison. En effet, ce moyen d'obturation s'introduit dans l'ouvreau de la cloison et se déploye a l'intérieur de celle-ci. Cet obturateur ne s'introduit plus au niveau des ouvreaux de murs comme cela se pratiquait par le passé avec les anciens registres.

La mise en place et le retrait des n obturateurs (sept dans le cas figuré) dans les sept ouvreaux de cloisons est rapide, sans danger pour le personnel, ni risque pour le matériel. Elle ne nécessite, en outre, aucune modification des ouvreaux de cloisons existants.

L'invention peut être mise en oeuvre sous certaines variantes, notamment en ce qui concerne le mécanisme de commande du bras de traction 4 : au lieu de la rotation d'une tige filetée 15 commandée par une poignée (dont la manoeuvre est longue si le pas du filetage est serré), on peut utiliser un mouvement par came et levier, avec basculement de la poignée de manoeuvre.

Lorsque la commande d'ouverture s'effectue par rotation d'une tige filetée, la commande est un principe irréversible, donc autoblocante, surtout si le filetage est à un pas serré. Dans le cas d'une commande par came et levier, le réglage doit être effectué de façon que le blocage s'effectue en fin de course de la poignée dans la position de déploiement de l'obturateur.

## Revendications

1. Dispositif d'obturation pour four à chambres ouvertes à feu tournant, destiné à interrompre la circulation d'air entre chacune des cloisons chauffantes (3) d'une chambre (1) et les cloisons correspondantes de la chambre adjacente, cette circulation s'effectuant normalement au travers d'un passage (8) ménagé à la partie supérieure du mur transversal (2) de séparation entre les cloisons (3) des chambres adjacentes, chaque cloison comportant, à sa partie supérieure, une pluralité d'ouvreaux (7), caractérisé en ce qu'il comporte :
   — une partie haute susceptible de dépasser l'ouvreau comprenant un profilé principal rigide (12) formant un support et un bras de traction (14) mobile en translation le long dudit profilé principal qui se prolongent vers une partie basse,
   — ladite partie basse comprenant deux profilés rigides (21, 21') secondaires situés de part et d'autre dudit profilé principal (12), de quatre biellettes et d'un moyen d'obturation (22) souple, rectangulaire, imperméable à l'air, supporté, sur chacun de ses deux grands côtés opposés, par l'un desdits profilés secondaires (21, 21'), les parties terminales en vis-à-vis des deux profilés secondaires étant reliées par deux biellettes (19, 25 et 19', 25'), chacune de ces biellettes étant articulée :
   — par une de ses extrémité (20, 26 et 20', 26') sur une desdites parties terminales
   — par son autre extrémité à l'autre biellette en un point de jonction commun (18, 24)
   les biellettes les plus proches de ladite partie haute étant aussi articulées en leur point de jonction (18) sur l'extrémité du profilé principal (12),
   les biellettes les plus proches de ladite partie basse étant aussi articulée en leur point de jonction (24) sur l'extrémité basse du bras de traction.

2. Dispositif d'obturation, selon revendication 1, caractérisé en ce que le bras de traction (14) est muni, à son extrémité supérieure opposée à l'articulation (24), d'un moyen de mise en translation par rapport au profilé principal (12).

3. Dispositif d'obturation, selon revendication 1 ou 2, caractérisé en ce qu'il comporte un moyen d'immobilisation du bras de traction (14) par rapport au profilé principal (12).

4. Dispositif d'obturation, selon revendication 2, caractérisé en ce que le moyen de mise en translation est une tige filetée (15) fixée à l'extrémité supérieure du bras de traction (14), et dans son prolongement, au moyen d'une rotule, coopérant avec une douille filetée (16) solidaire de la partie supérieure du profilé principal (12).

5. Dispositif d'obturation, selon l'une quelconque des revendications 1 à 4, caractérisé en ce que le moyen d'obturation (22) est choisi parmi les toiles et feutres en fibres minérales ou fibres synthétiques.

6. Dispositif d'obturation, selon l'une quelconque des revendications 1 à 5 caractérisé en ce que la largeur du moyen d'obturation (22) est supérieure de 5 à 50% à l'écartement maximal des profilés (21, 21') en position déployée, le dépassement étant sensiblement symétrique sur chaque côté.

7. Procédé d'interruption de la circulation d'air entre deux cloisons consécutives (3) d'un four à chambres à feu tournant au moyen d'un obturateur déployable selon l'une quelconque des revendications 1 à 6, caractérisé en ce que l'obturateur, mis en position repliée, est introduit par l'ouvreau (7A) de la cloison puis déployé en agissant sur le bras de traction (14).

8. Procédé selon revendication 7, caractérisé en ce que la partie inférieure de l'obturateur est mise en appui sur le rebord inférieur (11) du passage (8) entre les deux cloisons concernées (3).

9. Procédé selon revendication 7 caractérisé en ce que, pour rétablir la circulation d'air entre les deux cloisons concernées, on replie l'obturateur dans la cloison, par action sur le bras de traction 14, et on le retire à l'état replié par l'ouvreau (7A).

## Claims

1. A closure arrangement for a furnace of progressive-firing open-chamber type which is intended to interrupt the flow of air between each of the heating partitions (3) of a chamber (1) and the corresponding partitions of the adjacent chamber, said flow of air normally being effected through a passage (8) provided in the upper part of the transverse separating wall (2) between the partitions (3) of the adjacent chambers, each partition comprising in its upper part a plurality of flow holes (7), characterised in that it comprises :
   — a top portion capable of projecting from the flow bole comprising a rigid main member (12) forming a support and a traction arm (14) which is movable with a translatory movement along said main member, which are extended towards a bottom portion,
   — said bottom portion comprising two rigid secondary members (21, 21') which are disposed on respective sides of said main member (12), four links and an air-impermeable rectangular flexible closure means (22) which is supported on each of its two long opposite sides by one of said secondary members (21, 21'), the facing terminal portions of the two secondary members being connected by two links (19, 25 and 19', 25'), each of said links being pivotally connected :
   — by one of its ends (20, 26 and 20', 26') to one of said terminal portions and
   — by its other end to the other link at a common junction point (18, 24),
   the links which are closest to said top portion also being pivotally connected at their junction point (18) to the end of the main member (12),
   the links which are closest to said bottom portion also being pivotally connected at their junction point (24) to the bottom end of the traction arm.

2. A closure arrangement according to claim 1 characterised in that at its upper end which is in opposite relationship to the pivot connection (24) the traction arm (14) is provided with a means for producing translatory movement with respect to the main member (12).

3. A closure arrangement according to claim 1 or claim 2 characterised in that it comprises a means for immobilising the traction arm (14) with respect to the main member (12).

4. A closure arrangement according to claim 2 characterised in that the means for producing translatory movement is a screwthreaded rod (15) which is fixed to the upper end of the traction arm (14) and which in its extension by means of a ball joint co-operates with a screwthreaded sleeve (16) which is fixed with respect to the upper part of the main member (12).

5. A closure arrangement according to any one of claim 1 to 4 characterised in that the closure means (22) is selected from cloths and felts of mineral fibres or synthetic fibres.

6. A closure arrangement according to any one of claims 1 to 5 characterised in that the width of the closure means (22) is 5 to 50% greater than the maximum spacing of the members (21, 21') in the unfolded condition, the surplus being substantially symmetrical on each side.

7. A process for interrupting the flow of air between two consecutive partitions (3) of a furnace of progressive-firing chamber type by means of an unfoldable closure according to any one of claims 1 to 6 characterised in that the closure when put into its folded-up position is introduced by way of the flow hole (7A) of the partition and then unfolded by acting on the traction arm (14).

8. A process according to claim 7 characterised in that the lower part of the closure is caused to bear against the lower edge (11) of the passage (8) between the two partitions (3) in question.

9. A process according to claim 7 characterised in that in order to re-establish the flow of air between the two partitions in question the closure is folded up in the partition by acting on the traction arm (14) and it is withdrawn in the folded-up state by way of the flow hole (7A).

## Patentansprüche

1. Schließvorrichtung für Offenkammeröfen mit Drehfeuer, bestimmt zum Unterbrechen der Luftzirkulation zwischen einer jeden der Heiztrennwände (3) einer Kammer (1) und den entsprechenden Trennwänden der benachbarten Kammer, wobei diese Zirkulation normalerweise durch einen Kanal (8) erfolgt, der im oberen Bereich der Quertrennwand (2) zwischen den Trennwänden (3) der benachbarten Kammern ausgebildet ist, wobei jede Trennwand an ihrem oberen Bereich eine Mehrzahl von Arbeitsöffnungen (7) aufweist, **dadurch gekennzeichnet, daß sie aufweist :**
   — einen oberen bereich, der geeignet ist, über die Arbeitsöffnung vorzustehen, mit einem starren Hauptprofil (12), das eine Stütze und einen Zugarm (14) aufweist, der translatorisch entlang des Hauptprofils bewegbar ist, die sich in einen unteren Bereich verlängern,
   — wobei der untere Bereich zwei starre zweite Profile (21, 21'), die beiderseits des Hauptprofils (12) angeordnet sind, vier Schwingarme und eine nachgiebige Schließeinrichtung (22) aufweist, die rechteckig, luftundurchlässig, auf einer jeden ihrer beiden großen gegenüberliegenden Seiten durch eines der zweiten Profile (21, 21') getragen wird, wobei die Endbereiche gegenüber den beiden zweiten Profilen mit den beiden Schwingarmen (19, 25 und 19', 25') verbunden sind, wobei ein jeder der Schwingarme angelenkt ist :
   — durch eines seiner Enden (20, 26 und 20', 26') an einem der Endbereiche,
   — durch sein anderes Ende am anderen Schwingarm in einem gemeinsamen Verbindungspunkt (18, 24),
   wobei die Schwingarme, die dem oberen Bereich am nächsten sind, ebenfalls an ihrem Verbindungspunkt (18) am Ende des Hauptprofils (12) angelenkt sind,
   wobei die Schwingarme, die dem unteren Bereich am nächsten sind, ebenfalls an ihrem Verbindungspunkt (24) am unteren Ende des Zugarms angelenkt sind.

2. Schließvorrichtung nach Anspruch 1, **dadurch gekennzeichnet, daß** der Zugarm (14) an seinem oberen Ende, gegenüber dem Gelenk (24) mit einer Einrichtung zum in Translation bezüglich des Hauptprofils (12) Versetzen versehen ist.

3. Schließvorrichtung nach Anspruch 1 oder 2, **dadurch gekennzeichnet, daß** sie eine Sperrvorrichtung des Zugarms (14) bezüglich des Hauptprofils (12) aufweist.

4. Schließvorrichtung nach Anspruch 2, **dadurch gekennzeichnet, daß** die Einrichtung zum In-Translation-Versetzen eine Gewindespindel (15) ist, die am oberen Ende des Zugarms (14) befestigt ist, und in ihrer Verlängerung mittels eines Kniestücks mit einer Gewindehülse (16) zusammenwirkt, die mit dem oberen Bereich des Hauptprofils (12) verbunden ist.

5. Schließvorrichtung nach einem der Ansprüche 1 bis 4, **dadurch gekennzeichnet, daß** die Schließeinrichtung (22) aus den Stoffen bzw. Tüchern und Filzen aus Mineralfasern oder synthetischen Fasern gewählt ist.

6. Schließvorrichtung nach einem der Ansprüche 1 bis 5, **dadurch gekennzeichnet, daß** die Breite der Schließeinrichtung (22) größer ist als 5 bis 50% des Maximalabstands der Profile (21, 21') in ausgefahrener Stellung, wobei das Überstehen im wesentlichen auf jeder Seite symmetrisch ist.

7. Verfahren zum Unterbrechen der Luftzirkulation zwischen zwei aufeinanderfolgenden Trennwänden (3) eines Kammerofens mit Drehfeuer mittels einer ausklappbaren Schließvorrichtung nach einem der Ansprüche 1 bis 6, **dadurch gekennzeichnet, daß** die Schließvorrichtung in zusammengefalteter Stellung durch die Arbeitsöffnung (7A) der Trennwand eingeführt wird und sodann unter Einwirkung auf den Zugarm (14) ausgefaltet wird.

8. Verfahren nach Anspruch 7, **dadurch gekennzeichnet, daß** der untere Bereich der Schließvorrichtung in Andruck auf den unteren Rand (11) des Kanals (8) zwischen den beiden betrachteten Trennwänden (3) gebracht wird.

9. Verfahren nach Anspruch 7, **dadurch gekennzeichnet, daß** zum erneuten Erzeugen der Luftzirkulation zwischen den beiden betrachteten Trennwänden, die Schließvorrichtung in der Trennwand durch Einwirken auf den Zugarm (14) zusammengefaltet wird und sie im zusammengefalteten Zustand durch die Arbeitsöffnung (7A) herausgezogen wird.

**FIG.1**

**ZONES DE:**    **AMONT**

enfournement

(réparation)

défournement

refroidissement
forcé

**FIG.2**

pipe de
soufflage

refroidissement
naturel

sens
d'avance
du feu

plein feu

rampe de
brûleurs

préchauffage
forcé

préchauffage
naturel

pipe d'aspiration

chambre morte →

traitement fumées

**AVAL**

**FIG.3**

**FIG.4**

**FIG.5**

SECTION AA'

SECTION BB'

FIG.6

FIG.7

FIG.8